(19) Europäisches Patentamt

European Patent Office

Office européen des brevets

(11) **EP 0 650 138 B1**

(12) **EUROPEAN PATENT SPECIFICATION**

(45) Date of publication and mention
of the grant of the patent:
**27.01.1999 Bulletin 1999/04**

(51) Int Cl.⁶: **G06K 11/08**

(21) Application number: **94114713.4**

(22) Date of filing: **19.09.1994**

(54) **Touch-Screen input device using the monitor as a light source operating at an intermediate frequency**

Berührungsbildschirmsystem, das den Bildschirm als bei Zwischenfrequenz betriebene Lichtquelle benutzt

Système d'écran tactile utilisant l'écran comme source lumineuse opérant à fréquence intermédiaire

(84) Designated Contracting States:
**AT BE CH DE ES FR GB IT LI NL SE**

(30) Priority: **22.10.1993 US 142561**

(43) Date of publication of application:
**26.04.1995 Bulletin 1995/17**

(73) Proprietor: **International Business Machines Corporation
Armonk, N.Y. 10504 (US)**

(72) Inventors:
• **Chang, Ifay F.
Katonah, New York 10536 (US)**
• **Chen, Chengjun Julian
Yorktown Heights, New York 10598 (US)**

(74) Representative: **Teufel, Fritz, Dipl.-Phys.
IBM Deutschland Informationssysteme GmbH,
Patentwesen und Urheberrecht
70548 Stuttgart (DE)**

(56) References cited:
**GB-A- 2 206 203**

• **DIGEST OF TECHNICAL PAPERS -1989 INTERNATIONAL SYMPOSIUM OF THE SOCIETY FOR INFORMATION DISPLAY vol. 2 , May 1989 , BALTIMORE, MARYLAND, US pages 338 - 341 I. F. CHANG ET AL. 'New Touch-Input Technology for CRT Displays'**
• **IBM TECHNICAL DISCLOSURE BULLETIN vol. 33, no. 6A , November 1990 , NEW YORK US pages 296 - 298 'Versatile input device and technology for CRT terminal'**

# Description

## FIELD OF THE INVENTION

The present invention relates to a touchscreen input device for computers. More specifically, the invention relates to reflecting a CRT light pattern across the CRT surface to create signals used to determine the position of a pointer.

## BACKGROUND OF THE INVENTION

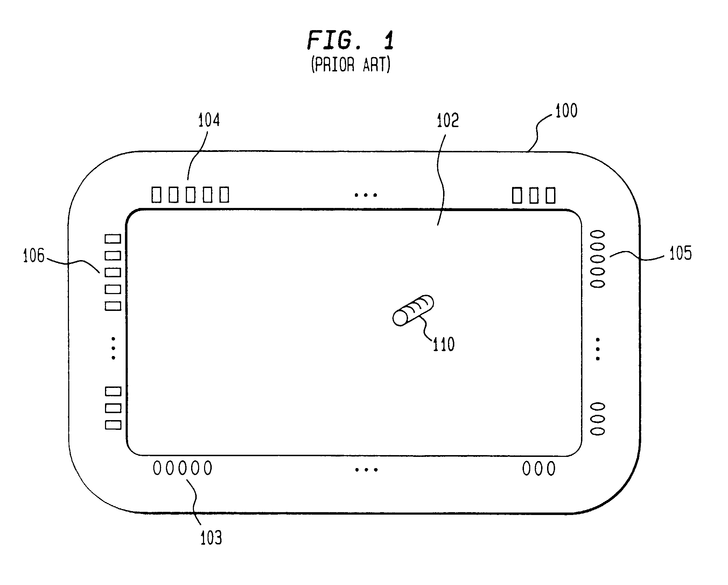

Touchscreen device is one of the most intuitive input devices for computers. It has been used extensively in public applications such as banks, kiosks, restaurants, ticket services, medical facilities, education, and places of recreation. Its application is steadily expanding. Many different methods have been used to realize a touchscreen input function. One of the oldest, and still the most widely used method, is the optical frame. It was described in U.S. Patent 4,267,443 entitled "Photoelectric Input Apparatus", issued May 1981 to Carroll et al., as shown in Fig. 1, 100. It utilizes a plurality of light emitters (103 and 105) and a plurality of light sensors (104 and 106) to detect the position of the pointer 110 (finger or pencil). In a typical device, an array of 32 infrared light emitting diodes 103 is placed at the bottom of the screen, and an array of 32 light sensitive diodes 104 is placed at the top of the screen. A pointer 110 (finger or pencil) may block the light emitted from one emitter to one or two adjacent light detectors. Therefore, it provides 63 touch points in the horizontal direction. In addition, an array of 20 light emitting diodes 105 is placed at the left-hand side of the screen, and an array of 20 light detectors 106 is placed at the right-hand side of the screen. This makes 39 touch points in the vertical direction. On a 13-inch monitor 102, the resolution is 0.17 inch, or 4.4 millimeters. By lining up more photodiodes, the resolution can be improved. However, the manufacturing cost will be increased in proportion. Besides, there is a physical limit imposed by the size of photodiodes.

A number of alternative methods using visible or invisible light for touchscreen input have been proposed to improve the resolution and to reduce the manufacturing cost (mainly by reducing the number of light sources and light detectors), as documented in the following U.S. Patents. U.S. Patent 4,459,476, entitled "Co-ordinate Detection System", issued July 10, 1984 to Weissmueller et al, teaches to use the light emitted from two adjacent sides of the CRT as the light source, whereas on the two opposite sides, two arrays of light detectors are placed. By using radiation-emissive material excited by a flying spot of energy (an electron beam), the device can eliminate the two arrays of light-emission devices. However, the scanning frequencies for the vertical and horizontal directions are very different. Typically, the vertical scan frequency is between 50 to 90 Hz, and the horizontal scan frequency is 25 to 60 kHz. Therefore, at least one of the light sources has to be generated separately. Besides, as seen from the Figures in the patent, the construction of the CRT is quite different from the standard CRT, which requires a substantial additional manufacturing cost. These factors offset the benefit of eliminating the separate light-emitting devices. U.S. Patent 4,507,557, entitled "Non-Contact x,y Digitizer Using Two Dynamic RAM Imagers", issued March 26, 1985 to Tsokos, teaches to use two light-emitting diodes, a set of mirrors, and two DRAM imagers for position detection. However, a DRAM imager together with its control electronics are more expensive than an array of photodiodes. U.S. Patent 4,553,842, entitled "Two Dimensional Optical Position Indicating Apparatus" to Griffin, uses a rotating photodetector to replace the array of photodetectors. These mechanical devices can be slow, expensive, and prone to mechanical failures. U.S. Patent 4,621,257, entitled "Video Display Touch Detection" to Brown describes a similar arrangement as in U.S. Patent 4,459,476. Light is emitted from the top side and the left side of the CRT light source, whereas on the arrays of photodetectors are replaced by two CCD strips located at the back of the CRT. Since the cost of a CCD strip and the associated electronics is more expensive than that of an array of photodiodes, it does not show an advantage over the previous inventions. U.S. Patent 4,703,316, entitled "Touch Panel Input Apparatus" to Sherbeck, uses four light sources, located at the four corners of the screen, and two arrays of photodetectors, placed on the opposite sides of the screen. This apparatus reduces the cost of the light sources, but the cost of the two arrays of light detectors are still there. U.S. Patent 4,710,760, entitled "Photoelastic Touch-Sensitive Screen" to Kasday uses a transparent screen made of photoelastic material to deflect two beams of polarized light. The manufacturing cost of the photoelastic material will probably be higher than the Carroll system described in U.S. Patent 4,267,443. U.S. Patent 4,782,328, entitled "Ambient-Light-Responsive Touch Screen Data Input Method and System" to Denlinger, uses two CCD line-scan image sensors located at two adjacent corners of the monitor screen to detect the change of light pattern due to the presence of a pointer near the screen. Ambient light is utilized as light source. The CCD image sensors are expensive, and the complication of discriminating the signal from the finger and the signal from the change of environmental conditions is at question. U.S. Patent 4,811,004, entitled "Touch Panel System and Method for Using Same" to Person et al. uses two light sources and two light detectors for position detection. To make scanning light beams, two vibrating reeds with mirrors are used to reflect the light beams, thus to create two independent scanning light beams. A problem is that the behavior of the mechanical vibrators depends on the environmental conditions and is subject to wear. U.S. Patent 4,820,050, entitled "Solid-State Optical Position Determining Apparatus" to Griffin, U.S. Patent 4,980,547, entitled "Light Distribution and Detection Apparatus" and U.S. Patent 5,196,835, entitled "Laser Touch Screen Reflective Surface Aberration Cancelling" to Blue et al., are variations of U.S. Patent 4,553,842, which have the same problem with the mechanical motion parts.

Prior art exists (see Digest of technical papers - 1989 Internation Symposium of The Society For Information Display, pages 338-341, I.F. CHANG et Al.: 'New Touch-Input Technology for CRT Displays') that proposes using the light from the margins of the CRT monitor and four light detectors to make a touchscreen input device. Although the feasibility of the approach is demonstrated, enormous problems were encountered with regard to noise and interference. The signal from one edge of the monitor to the light detectors at the other edge of the screen is very small. The interferences come from three sources: the magnetic field of the horizontal scanning coil; the light from the active screen; and the the environmental light. In addition, the afterglow (slow decay) of the phosphor makes the signal variation (per horizontal line) much smaller. All those factors prevented the effective operation of this apparatus.

In spite of the numerous proposed improvements, currently, the only touchscreen input device known to the inventors that viably uses light as means of detection is still the oldest Carroll design. (The others use capacitance, resistance, surface acoustic wave, or strain gauges, all of which are more expensive compared to the optical frame.) The problem of improving the resolution as well as reducing the cost of optical touchscreen input devices remains unresolved.

OBJECTS OF THE INVENTION

It is an object of this invention to provide an improved touch screen input device.

It is an object of this invention to provide an improved touch screen input device that locates the position of a screen pointer quickly and accurately.

It is an object of this invention to provide an improved, inexpensive touch screen input device that uses little more than existing screen hardware and is not effected by the system noise generated by the raster scan.

SUMMARY OF THE INVENTION

These and other objects of the present invention are realized by providing a new kind of touchscreen input device which has a much better resolution but uses fewer components than the traditional optical frame. The present invention substantially improves the touch screen performance and reduces the manufacturing cost.

Touch-screen input apparatuses according to a first and second aspects of the invention are defined in claims 1 and 2, respectively. The features in the preamble of claim 1 are disclosed by the aforementioned article by I.F. CHANG et Al. In a preferred embodiment, the light patterns are created by a simple electronic circuit, whose output signal is coupled to the video amplifier of the CRT. The light patterns are created to have a unique pattern frequency, determined by the electronic circuit. The light pattern frequency is carefully selected to be easily discriminated, such that environmental disturbances and interference signals from within the CRT itself (such as the magnetic coil, and the light from the active screen area) can be effectively rejected. The light patterns in the margins of the CRT screen are deflected by reflective surfaces. The reflective surfaces are positioned in proximity to the strips of light patterns and reflect the light across the surface of the CRT. Four single photodetectors (detectors), preferentially one located at each of the four corners of the CRT screen are used to monitor the streams of reflected light. When a pointer (finger or pencil) is positioned on or near the surface of the CRT, the stream of light is blocked. The precise time of the blockage is detected by two or more of the sensors, which provide enough information to determine the pointer position.

BRIEF DESCRIPTION OF THE FIGURES

FIG. 1 is a drawing of a prior art optical-frame touchscreen device.

FIG. 2 is a cross-section view of the touchscreen input device of the present invention.

FIG. 3 shows the relation between the position of the pointer and the time sequences of the light pulses received by each of the four light detectors or alternatively the detector pulses generated by each of the light detectors.

FIG. 4 is a schematic showing one preferred way of creating an electrical signal for making the light patterns of a unique frequency.

FIG. 5 shows voltage versus time graphs to illustrate how the signals shown in Fig. 4 are combined with inherent CRT signals to control the CRT electron beam to produce the light patterns.

FIG. 6 is one preferred hardware embodiment for creating the the electric signal shown in Fig. 4.

FIG. 7 shows one preferred design of the light reflectors.

FIG. 8 is a typical circuit for the band-pass filter and amplifier to filter the signal from the light detectors.

FIG. 9 is a schematic of a preferred circuit to detect the timing of the light blocked by the pointer.

FIG. 10 is the typical waveform found after the analog amplifiers.

FIG. 11 shows the calculation of the X-Y coordinates of the pointer from the locations of the obstruction of light.

FIG. 12 is the resolution distribution on the CRT screen.

## DETAILED DESCRIPTION OF THE INVENTION

The present invention is a novel modification of a CRT monitor of a computer that uses the light emitted from the CRT in a novel way as the source of signal to make the CRT a touchscreen input device. In other words, the invention inexpensively and effectively modifies the design of the CRT monitor to create a touchscreen input as an intrinsic function. The present invention can be made during the manufacturing process of the monitors with a small incremental manufacturing cost. In one preferred embodiment, the additional parts include a simple circuit (that can be a single chip or other means) to generate light patterns on the unused area of a CRT screen, a plastic reflector, four light detectors (e. g. silicon PIN photodiodes) with analog amplifiers, and a circuit for inputting the position signals into the computer.

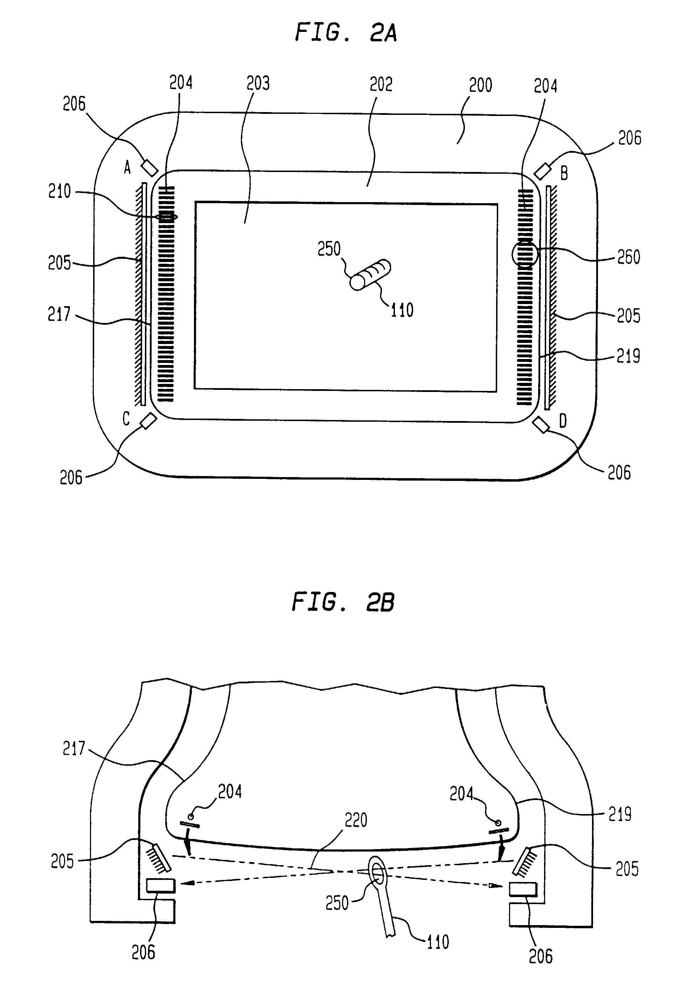

A schematic of one preferential embodiment of the new touchscreen input device is shown as Fig. 2. On the unused area 202 of the CRT, preferably at the left margin 217 and the right margin 219, two rows of light patterns 204 are generated. The light is reflected by a pair of mirrors 205 to become parallel to the surface of the CRT. Four light detectors 206 are placed at the four corners of the CRT. When a pointer 110 is in the active area 203 of the CRT, at least a part of the light of the light pattern 204 is blocked from the detector 206. Using the location of the light blockage with respect to two or more detectors and other information, the position of the pointer 110 can be determined.

A critical novel feature of this invention is the creation of a unique frequency (in time and space) of the light pattern. The light pattern frequency is chosen to be different from the frequencies of the noises (internal and external) found at the CRT so that the light pattern frequency, and therefore, information about the blockage of the light pattern at any given location can be effectively picked up, amplified, and transferred to the computer.

If the light pattern 204 frequency is near the horizontal or vertical scan frequencies, it is very difficult to detect the onset positions of light blockage. This is because there are large signal noises at the CRT with these frequencies. The environment light, which varies with the line frequency (50 Hz or 60 Hz), and its overtones, has a frequency close to the typical vertical scan frequency and is much stronger (hundreds or thousands of times) than the light from the CRT edge. Also, the light pattern 204 frequency 260 cannot be near the horizontal scan frequency for two reasons. First, the magnetic field of the horizontal scan is so strong that it will obscure the optical signal even with a sophisticated magnetic shield. Second, the phosphor used on CRTs has a finite decay time to avoid flickering. Therefore, the variation of the light intensity with time is much smaller than expected, which makes the light pattern frequency 260 more difficult to detect.

The present invention avoids these problems by creating the light pattern 204 with a frequency 260 in time and a frequency in space that is much higher than the frequency of the vertical scan and the line frequency, and much lower than the horizontal scan frequency. This light pattern 204 can be generated by using a circuit to create a video signal for generating lighted edge points 210 of the light pattern 204 (where the raster crosses the border 202 of the CRT) to occur in a predetermined spatial sequence and time frequency. Any number of these sequences, i.e. time and space frequencies 260 of the the light patterns 204, can be chosen to be at a much different rate than the horizontal and vertical scan frequencies (and other noise.) This video signal can be created either using hardware or using software thus to selectively light the bright edge points 210 of the light pattern 204. For example, for VGA monitors, the horizontal scanning frequency is 31.5 kHz. The light pattern sequences 204 can be chosen to appear as a group of $m$ bright dashes (for illustration purpose, let $m = 1$) every $n$ (for example, $n = 2, 3, 4, 6,$ or $8$) horizontal scans. The frequency of the light pattern 204, in relation to the raster frequency, is then

| Ratio $n$ | Signal Frequency (kHz) | Spatial resolution (lines) |
|---|---|---|
| 2 | 15.75 | 480 |
| 3 | 11.8 | 320 |
| 4 | 7.88 | 240 |
| 6 | 5.9 | 160 |
| 8 | 3.94 | 120 |

As shown, these light pattern 204 frequencies 260 are indeed much higher than the vertical scan frequency and line frequency (71 Hz and 60 Hz respectively), and much lower than the horizontal scan frequency (in this case 31.5 kHz). Therefore, using a band-pass filter, the two sets of interfering signals can be rejected efficiently, and the signal of pointer blockage (which is carried on the light pattern 204 frequency 260) can be detected clearly. More than one light dash can be grouped to give greater light intensity. Also, by choosing different $n$, a desirable trade-off between stability and resolution can be achieved.

The light patterns 204 that are reflected across 220 the screen 200 face, are detected by the detectors 206, preferentially one of which is located in each of the screen 200 corners (A-D). Each of these detectors 206 generates a detector signal that is based on the light pattern 204 it detects. In a preferred embodiment, the lighted edge points 210 are bright dashes 210. In the presence of a pointer 110, some of the bright dashes of the light patterns 204 are blocked to at least two of the detectors. In this way, the blockage information, that is related to the position of the pointer 110 on the screen is carried by the light pattern frequency 260. The blockage information therefore, is also represented in the detector signals detecting a light pattern 204 with some blocked bright dashes.

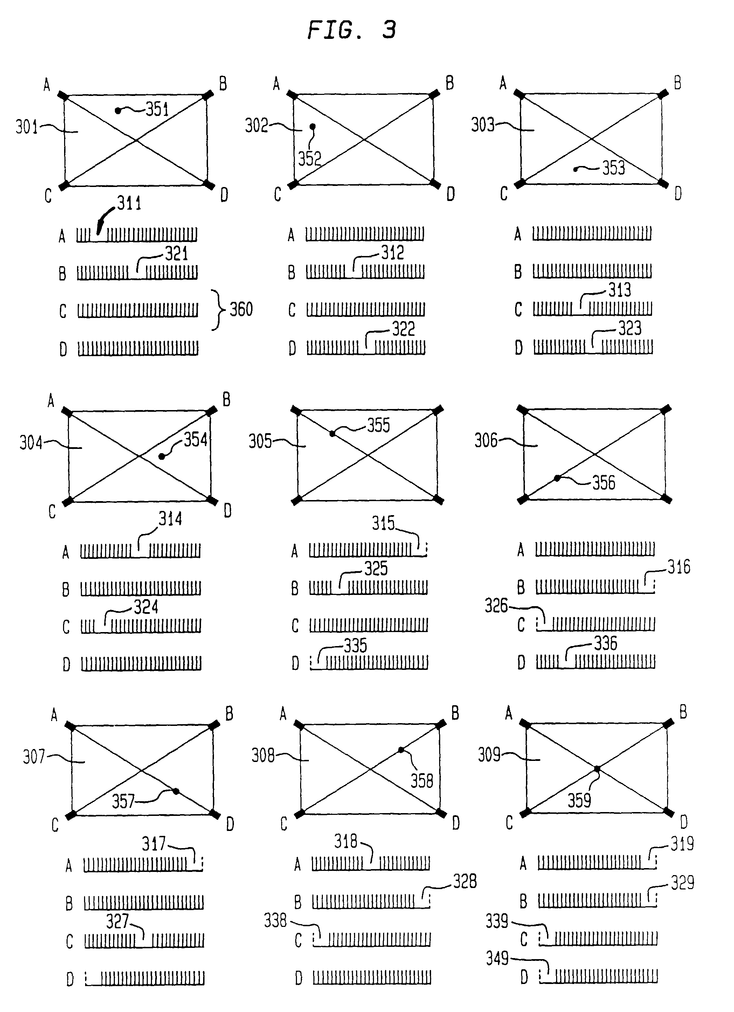

As the position 250 of the pointer changes on the screen, the bright dashes 210 of the light patterns 204 detected at each detector 206 are different because the light patterns 204 are altered by the blocked lighted dashes 210, as shown in Fig. 3. Fig. 3 shows the pointer 110 at various positions (351-359) on the active display area 203. Below each screen 200 representation (301-309), there is a plot of detector signal received versus time for each detector 206 (A-D). The horizontal scale of each plot of the Figure represents time. The total length of the horizontal scale is the time of a complete raster scan (e.g. one vertical scan). For a VGA monitor, the time of a complete raster scan is about 14 msec. In the absence of a pointer 110, the light from the bright dashes 210 detected by the four light detectors A, B, C, and D span the entire time scale.

With the presence of a pointer, some of the detector signals, representing the light from the bright dashes 210 of the light pattern 204, are missing. This is because, the light from the bright dashes 210 to the respective detector 206 is blocked at that time. The time (in reference to the start of the vertical scan) that the light from the bright dashes 210 are blocked to the respective detector 206 is related to the location of the pointer 110. Therefore, depending on the actual location (351-359) of the pointer 110, the timing of the missing detector signals (311-319 and 321-329) are different, as shown by the nine plots of Fig. 3. The X-Y position and the size of the pointer can be determined by the timing of these detector signals (typically 360). If the pointer is located in one of the four regions, as shown in 301 though 304, the missing detector signals (311-314 and 321-324, respectively) occur to pairs of detectors 206 for each position (351-354) of the pointer 110. If the location of the pointer crosses one or more of the borders of the four regions, as shown in FIG. 3 (305-308), some of the missing detector signals will occur at the beginning or the end of the stream. Therefore, three or more detectors are affected. If the pointer is at the center of the screen, all four detectors are affected, as shown in FIG. 3 (309). The processing of the detector signals will be discussed in detail below.

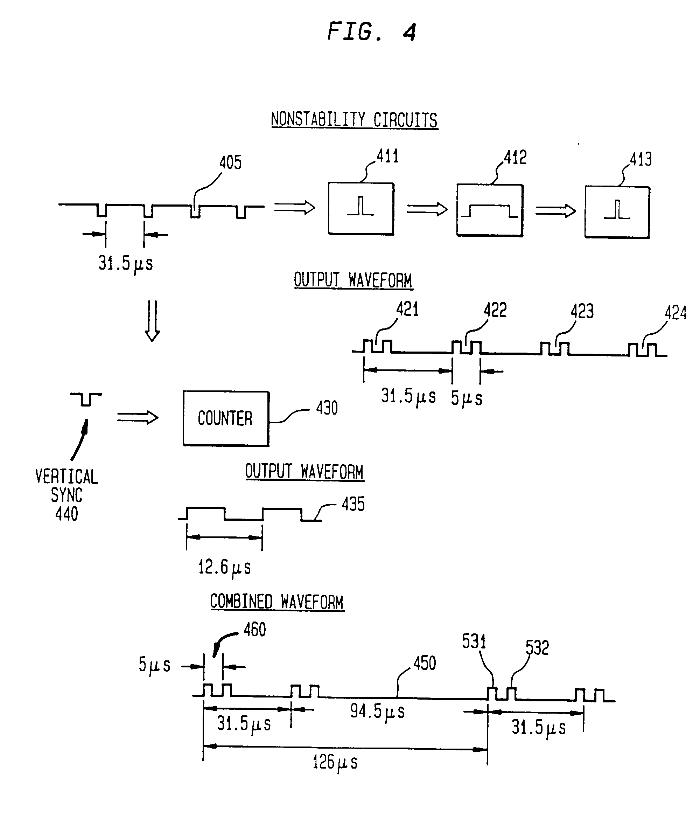

Fig. 4 shows the details of timing diagram of the electrical pulses used for generating the light patterns 204 in the left 217 and right 219 margins of the CRT screen 200. In this particular embodiment, the pulses are generated by an electronic circuit. The origin of the signal is the horizontal synchronization (h-syn) pulse 405. On the one hand, the rising edge of the horizontal sync pulse 405 triggers three (411-413) monstability circuits. The monstability circuits 411 and 412 each generate two consecutive pulses (421-424) of width about

0.5 μsec. The interval 460 between the two pulses, typically 531 and 532, is about 5 μsec, which is generated by monstability 412. The first pulse of each pair will be used (see below) to create the bright dash 210 at the end of a horizontal scan (e.g., the right side 219) while the second pulse of each pair will be used to create the bright dash 210 at the start of the next horizontal scan (e.g., the left side 217). (The 5 μsecond spacing 460 between the pulses in each pairs is used to permit the electron beam to fly back.)

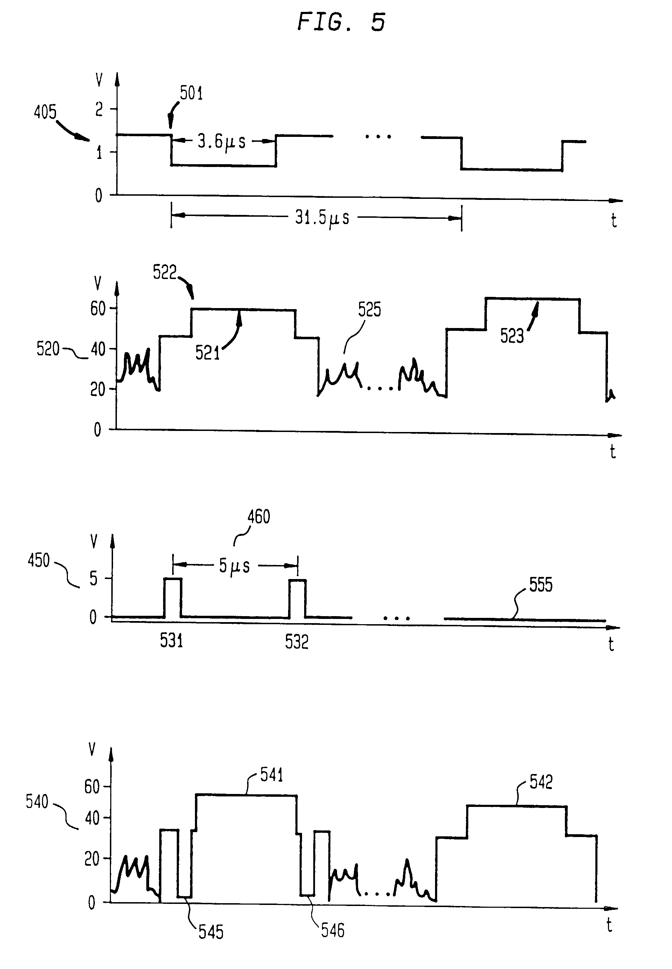

On the other hand, the rising edge of the said horizontal sync pulse 405 triggers a counter 430 to create a square wave 435 with a frequency which is a integer factor of the frequency of the said horizontal sync pulse 405. To make the string of signals synchronous to the vertical scan, the vertical synchronization pulse 440 is used to clear the counter 430. The stream of consecutive pulses (421-424) is then modulated by the square wave 435 to create an alternating stream of double pulses 450. As shown, the fundamental period of this pulse sequence is 126 μsec, or a frequency 7.88 kHz. This frequency is distinctly different from all the system and environmental signals. By applying the alternate double pulses 450 on a video amplifier, a composite video signal to generate the desired pattern of light from the bright dashes is created, as shown in FIG. 5.

As shown in FIG. 5, 405 is the vertical sync pulse of the CRT. The beginning edge 522 of the blanking pulse 521 of the original video signal at the output stage, 520, is about one microsecond later than the beginning edge of the vertical sync pulse, 501. The blanking pulse 522 is generated by the CRT to suppress the electron beam from exciting the screen during each fly back. (Note that the video signals, typically 525, appear between the blanking pulses 522 and 523.) The timings of the monstability circuits 411 through 413 are adjusted to create two brightening pulses 531 and 532. These two pulses 531 and 532 are also represented as the pairs of pulses shown in Fig. 4. These two pulses 531 and 532 are coupled to the original video signal 520 to create a composite video signal 541. After being amplified and inverted, the two pulses 531 and 532 cause the composite video 541 to have two low-voltage pulses, one at its beginning 545 and one at its end 546. These low voltage pulses 545 and 546 generate two bright dashes in the borders 217 and 219 of the CRT screen, 204. Certain light edge points (dashes) can be selected to be lighted or not. To do this, the pulses 545 and 546 do not appear at every horizontal line. For example, to make a $n = 4$, $m = 2$ pattern, for every four lines, two lines will have these pulses 545 and 546, and two others do not. This edge point selection determines the light pattern frequency (in time and space) that carries the position signal (light blockage).

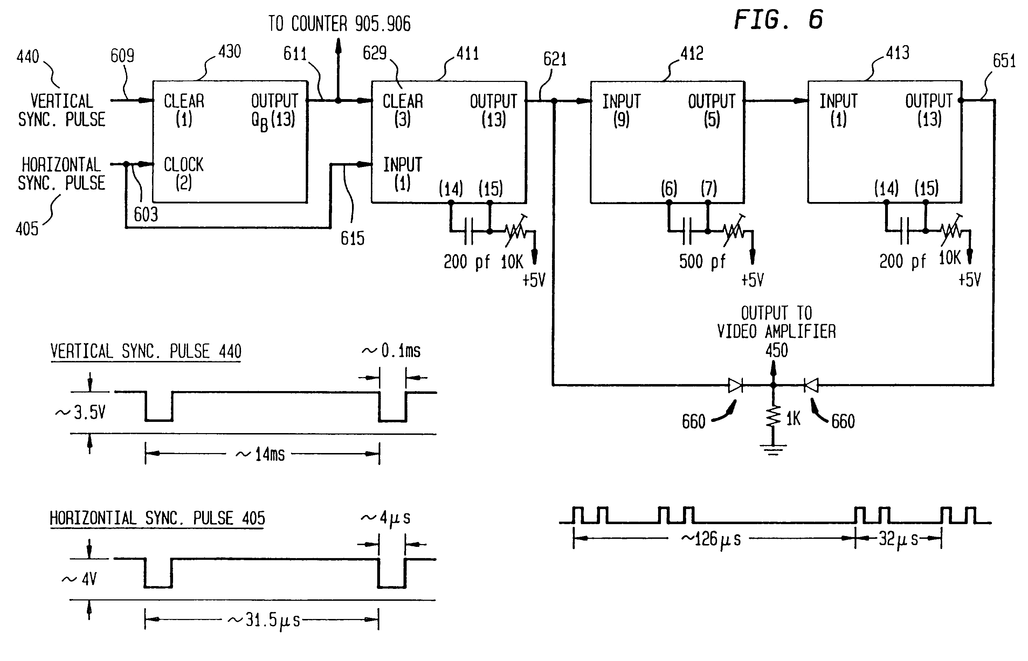

Fig. 6 shows an example of an actual circuit for generating the stream of pulses 450. In this circuit, the beginning edge of the horizontal synchronization pulse 405 from the computer is connected to the clock input 603 of a counter 430, for example, MM54HC161. The CLEAR 609 input of the counter 430 is connected to the vertical synchronization pulse 440, also from the computer. The $Q_B$ output 611 is sent to the CLEAR input 629 of a series of monostable multivibrators (monstability) 411 through 413, for example, MM54HC221A. The horizontal synchronization pulse 405 is connected to the input 615 of the first monstability 411, which is then followed by two monstabilities 412 and 413. The output (621 and 651) from the first 411 and the third 413 monstabilities is fed to an OR circuit 660 and the OR circuit output 450 is used to make the composite signal 540, which is then sent to the input point of the video amplifier.

If the manufacturing process of the CRT is allowed to be altered, a preferential embodiment is to use a short-afterglow infrared phosphor at the left 217 and right 219 margins of the screen. The pulses 450 are sent to the input points of all three color video amplifiers. The silicon PIN photodiodes 206 used as detectors are most sensitive to near infrared light (about 800 nm). Using filtering materials, the visible light can be completely blocked. However, actual experimental showed that although the infrared phosphor may improve the performance, it is not an absolute necessary. Any existing CRTs can be used. The green and blue phosphor of ordinary CRTs (P22) has a short afterglow time (40 µsec) than the red phosphor (1 msec). It was found experimentally that the green and blue phosphors of existing color CRT monitors are appropriate for the operation of the touchscreen device.

Alternative preferred embodiments of the circuit in Fig. 6 are possible, and are within the scope and contemplation of the invention.

For example, the three monstabilities can be replaced by a clock and a counter. The circuit can be made as one specially designed chip, without any capacitor and trim resistor.

Further, the light pattern can also be generated using software. Then, this input device can be retrofitted to existing monitors. However, in this embodiment, the light pattern occupies some areas at the left and right edges of the active screen 203. Thus, the existing application softwares may need to be modified, or new applications may need to be developed.

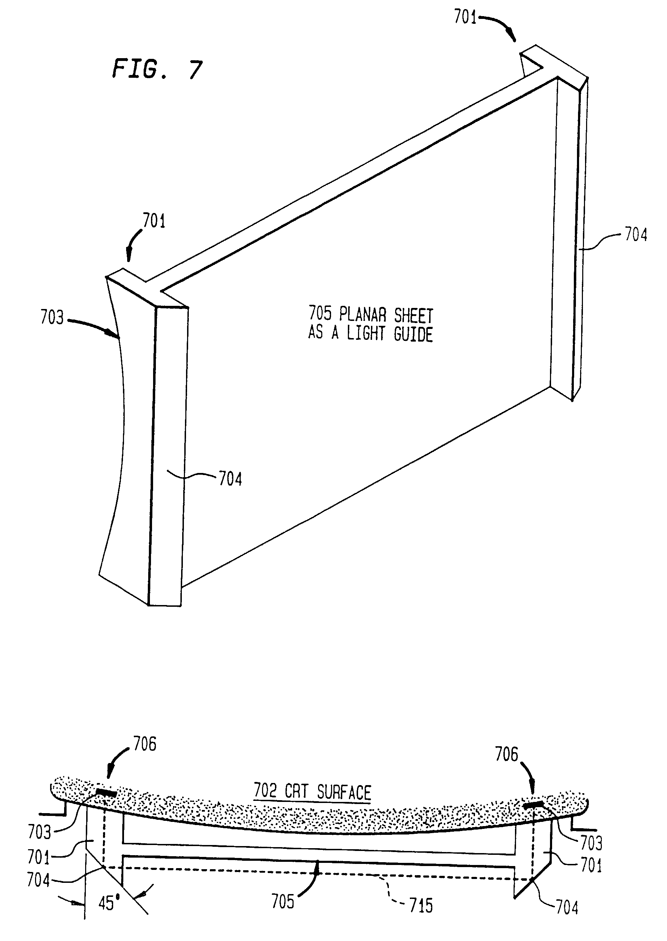

Figure 7 shows a preferred design of the plastic light reflector 700. It is made of plexiglass or any transparent plastics with an index of refraction larger than 1.4. The reflector 700 consists of two vertical bars 701 of about 5-10 mm thick. On the inner side 710, the shape 703 of the bar conforms with the CRT surface 702 at the location 706 of the light pattern. On the outer side 704, the bar 701 has a 45° surface. This surface can either be completely flat or slightly curved. A properly designed curved surface will improve the reflected light intensity but may be more difficult to manufacture. The intensity of reflected light increases with some curved surfaces because the curved surface acts a focusing mechanism.

The inner surfaces 703 of the bars 701 are glued on the CRT surface with a transparent adhesive to eliminate two reflective surfaces. The light pattern 204 of the CRT is transmitted through the bars 701 and reflected by the 45° surface through total reflection to become roughly parallel to the CRT surface. As an option, the two vertical bars 701 are connected with a thin (3-5 mm) plastic or glass plate 705 which covers the active area 203 of the CRT. The mirror image of the light pattern from the surface of the plate 705 nearly doubles the light intensity at the light detector. Also, it gives a user a sense of touch. Because the thin plate 705 is vulnerable to scratching (for plastics) and breaking (for glass), this plate 705 can be made as a replaceable part. Because the plate 705 is not a essential functional element, the accuracy of its positioning is not critical, and it is simply a rectangular piece of thin plastic plate, the cost of its replacement is negligible.

In the actual manufacturing process, the plastic reflector may include some additional strengthening ribs, the mounting ports for the light detectors and the amplifiers. Those can be molded in a single manufacturing step.

An alternative embodiment of the reflectors is to use metal mirrors or metallized mirror surfaces.

Alternatively, by engraving a series of non-reflective horizontal grooves on the mirrors (or plastic reflectors), the specific frequency can be created by using a uniform light bar at the right margin and the left margin of the CRT screen. For example, by engraving 100 evenly spaced horizontal grooves on the mirror strip, for a VGA monitor, a signal frequency of about 7.1 kHz is generated.

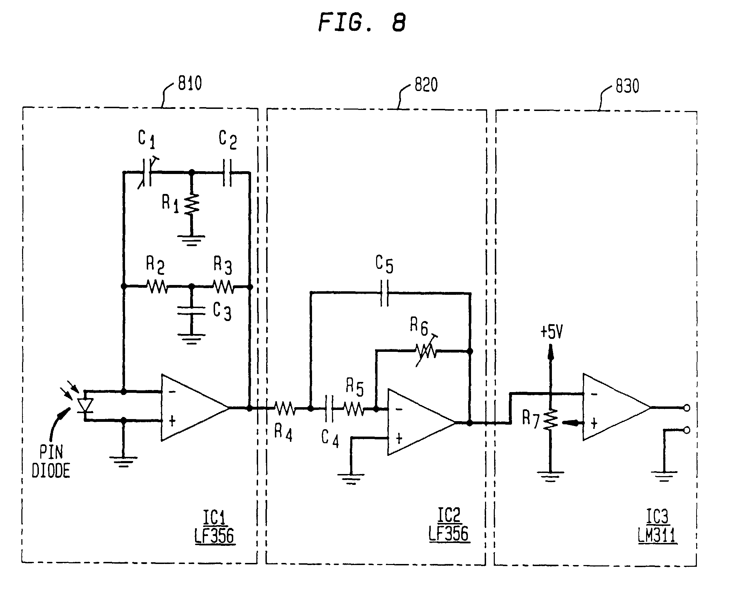

Figure 8 shows an example of the analog amplifier 800. An important function of the amplifier 800 is to pick up the useful signal and to reject various kinds of noise. One large noise common to these systems is the magnetic field of the horizontal deflection coil. For VGA monitors, this frequency is 31.5 kHz. Other noise is the room light and the magnetic field of the power line, which contains the fundamental and many overtones of the 60 Hz source. By choosing a light pulse frequency of the light pattern 204 from the bright dashes 210 between these two noises and using a band pass filter 810, the true signal of the light pattern 204 can be picked up. For VGA monitors, an example of the chosen frequency (in time) is 7.88 kHz, 1/4 of the horizontal scan frequency. After amplification 820, the analog signal is sent to a comparator 830, to compare with an adjustable fixed voltage. The result is a series of TTL pulses (either 0V or +5V) representing the light pattern 204.

Alternative methods for such band-pass filtering comprises switch-capacitor filters, and phase-sensitive detection methods such as used in lock-in amplifiers. These methods can be used for multiple-frequency detection, because the frequency can be programmed or changed by changing the reference frequency.

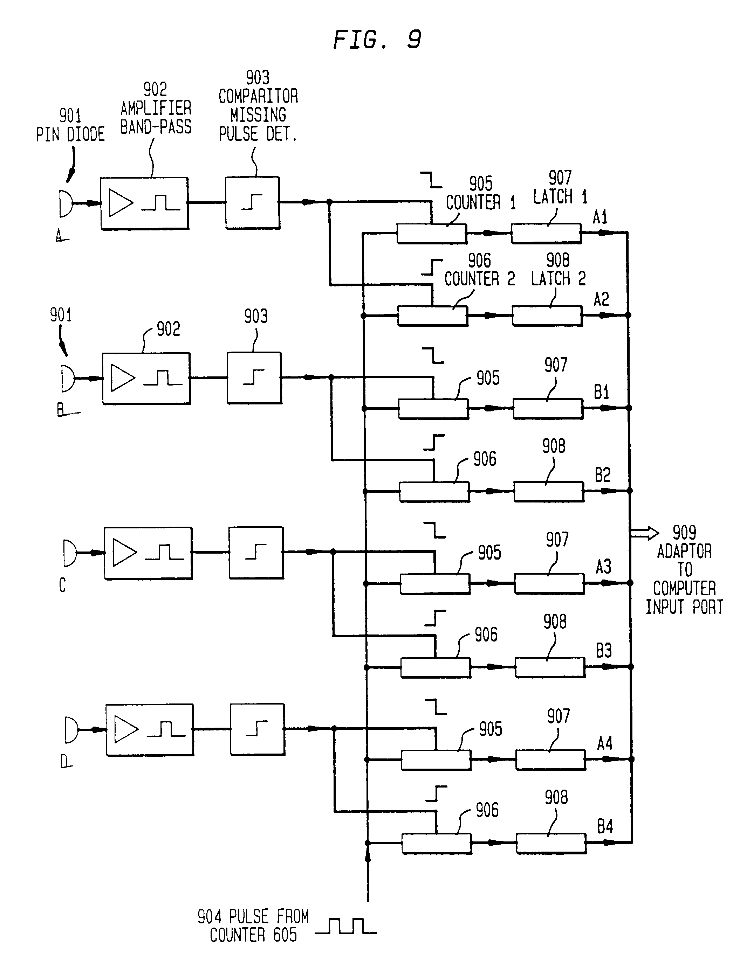

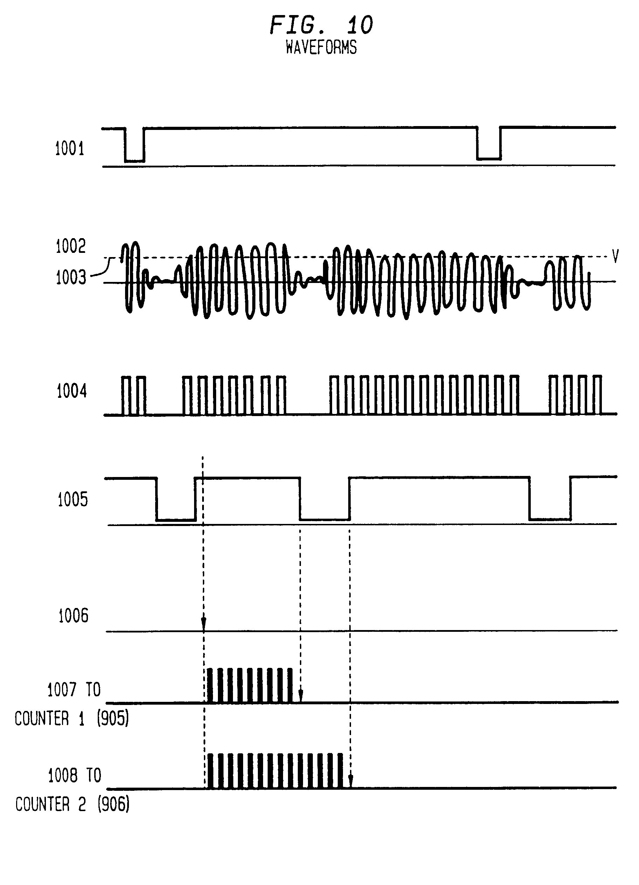

Figure 9 is a schematic of the digital circuit which converts the output of the comparator 830 to a stream of digital signals which the computer can receive through the serial port (or the parallel port). Figure 10 shows the corresponding waveforms. The vertical synchronization signal, 1001, is used for the reference of the counters, 905 and 906. The output from counter 605 is the clock pulse for counters 905 and 906. The signal from the light detectors, after amplification and filtering, 1002, is sent to a comparator 903 with level 1003. The output of the comparator, 1004, is sent to a missing pulse detector, 904, which generates a waveform 1005. The counters 905 and 906 are started with a delayed signal from the vertical sync pulse 1001. The timing of it is after the starting of the pulse sequence 1004. The falling edge of the output of the missing pulse detector, 1005, is used to terminate counter 905. The rising edge of 1005 is used to terminate counter 906. Therefore, the content of counter 905 reflects the starting position of the pointer, and the content of counter 906 reflects the ending position of the pointer. The contents of the counters are then transmitted to the computer via the series port or parallel port. The digital circuit can be made either from a programmable logic circuit or as an application specific integrated circuit.

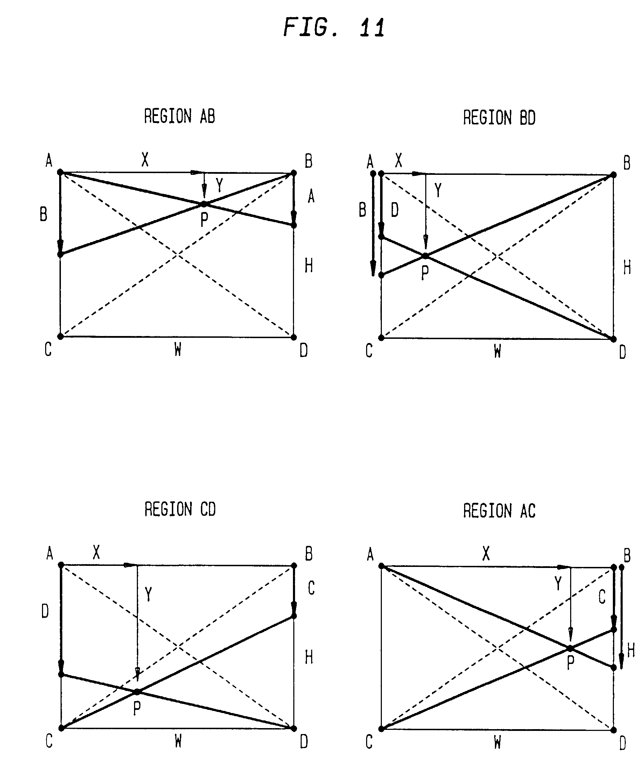

The X-Y coordinates of the pointer can be calculated from the start points and end points of the pulse sequences, that is, the contents of the counter as sent to the computer. The calculation procedure is shown in FIG. 11. The quantities H and W are the height and width of the rectangle spanned by the four light detectors, respectively. The origin of the coordinate system is the left upper corner of the rectangle. In region AB, the light detectors A and B are intercepted. The coordinates of the pointer are

$$X = \frac{BW}{A + B},$$

and

$$Y = \frac{AB}{A + B}.$$

In region CD, the light detectors C and D are intercepted. The coordinates of the pointer are

$$X = \frac{W(H - D)}{2H - C - D},$$

and

$$Y = \frac{H^2 - CD}{2H - C - D}.$$

In region BD, the light detectors B and D are intercepted. The coordinates of the pointer are

$$X = \frac{HB}{H + B - D},$$

and

$$Y = \frac{HB}{H + B - D}.$$

In region AC, the light detectors A and C are intercepted. The coordinates of the pointer are

$$X = \frac{WH}{H + A - C},$$

and

$$Y = \frac{HA}{H + A - C}.$$

The resolution on the entire region is not uniform. The maximum resolution is in a region around the center of the screen. For a 13 inch VGA monitor, the horizontal scanning frequency is 31.5 kHz. According to the ratio between the horizontal scan frequency and the signal frequency, the maximum resolution is

| Ratio | Signal Frequency (kHz) | Resolution (mm) (lines) | |
|---|---|---|---|
| 2 | 15.75 | 0.45 | (480) |
| 3 | 11.8 | 0.675 | (320) |
| 4 | 7.88 | 0.9 | (240) |
| 6 | 5.9 | 1.35 | (160) |
| 8 | 3.94 | 1.8 | (120) |

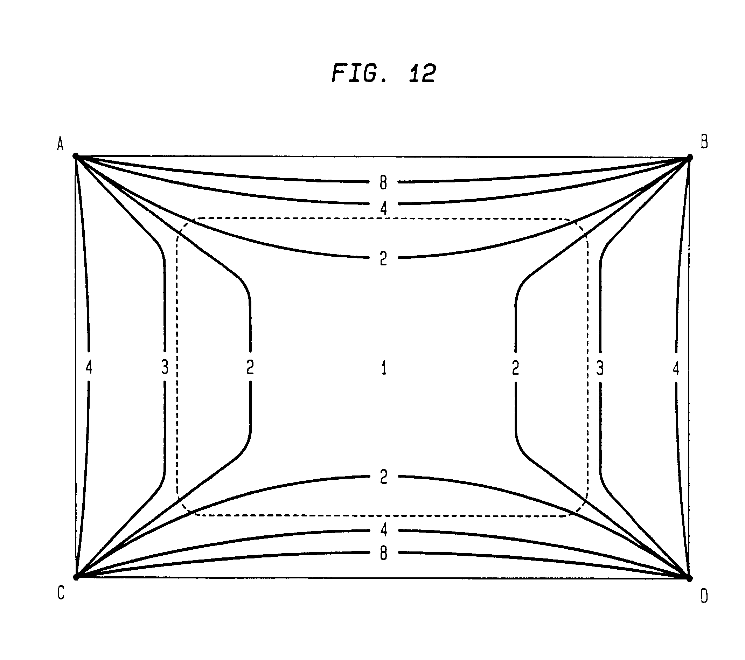

Near the borders, the resolution is worsened, as shown in FIG. 12. In a preferred embodiment, to achieve a relatively uniform resolution, the light detectors must be placed at four points way outside the active screen. Such a condition means that the height of the strips of the light pattern should be greater than the height of the active screen. Actually, by creating the light pattern with a circuit, as shown in Figs. 4 through 6, the height of the light pattern strip is naturally greater than the height of the active screen 203. The optics requires that the horizontal positions of the light detectors be outside the patterns by at least a distance from the screen surface to the center of the reflective surface. Therefore, the condition is naturally satisfied. Hence, the low-resolution regions of the input device near the borders of the screen are naturally avoided.

One skilled in the art given this disclosure could develop alternative equivalent embodiments that are within the scope and contemplation of the present invention.

For example, since the resolution (of pointer 110 detection) is determined by the density of light sources (dashes) in the light pattern, the spatial frequency 260 of the dashes 210 can be increased to increase the resolution. Therefore, a much improved accuracy can be gained by increasing the density of light sources (dashes 210) in the light pattern 204. Note that the light pattern 204 spatial frequency 260 and therefore the apparatus positioning accuracy, is not limited by the physical size of photodiodes light sources. In addition, the light intensity can also be varied by changing the spatial frequency of the light pattern 204. This can be done by choosing a spatial pattern with lighted dashes (edge points) in groups of more than one to increase the intensity of the light reflected at the location of the dash grouping.

The four photodetectors and the associated circuits are the only significant additions to the manufacturing cost of the monitor with the touchscreen function. Therefore, the present touch screen input apparatus can be manufactured with a much lower incremental cost than prior art touchscreen input devices. In addition, the present invention has no mechanical moving parts that are subject to wear.

## Claims

1. A touch screen input apparatus for determining the position of a pointer (110) on a computer interface screen (202), comprising:

   a computer interface screen (202,203) having a screen surface (203) and one pair of borders (217,219), being a first border (217) along a first screen side and an opposite second border (219) across the screen surface from the first border along a second screen side;

   a raster scanner that scans the screen surface (203) and the first and second borders (217,219) at a horizontal scanning frequency, the scanner in each horizontal scanning frequency cycle crossing the screen in a first direction in one of a plurality of rows that intersect the first and second borders and the scanner indexing across the screen in a second direction approximately perpendicular to the first direction at a vertical scanning frequency so as to scan all the rows of the screen surface in each vertical scanning frequency cycle;

   means for producing a pattern (204) formed of a plurality of lighted edge points (210), the edge points being at intersections of the rows and said first and second screen borders (217,219);

   a first and second light reflective surfaces (205) adjacent the first and second sides, respectively, the first reflective surface (205) reflecting the pattern of lighted edge points from a first border (217) across the screen to the second side and the second side reflective surface (205) reflecting the pattern of lighted edge points from the second border (219) across the screen to the first side;

   four or more light detectors (206), the light detectors located adjacent to the borders of the screen to detect the lighted edge points of the pattern reflected by the light reflective surfaces (205);

   a circuit means for determining the positions of the lighted edge points whose light is blocked by the pointer (110) from reaching any of said light detectors (206); and

   a means for determining the position (P) of the pointer (110) on the screen by using said positions of said lighted edge points whose light is blocked by the pointer (110);

   characterised in that the pattern is produced by the scanner selectively lighting a first set of edge points and selectively not lighting a second set of edge points as the scanner passes over the edge points, the pattern flashing at a pattern frequency, different from both the horizontal and vertical scanning frequencies, determined by the selective lighting of the edge points.

2. A touch screen input apparatus, as in Claim 1 where instead of producing said pattern and said pattern frequency by selective lighting of the edge points, said pattern is produced by lighting the edge points as the scanner passes over the edge points so as to form a continuous bar of light in both borders and said pattern frequency is created by non-reflective grooves in the reflective surface.

3. A touch screen input apparatus, as in Claim 1 or 2, where the lighted edge points are light dashes.

4. A touch screen input apparatus, as in Claim 1 or 2 or 3, where there are four detectors each of which is located in a corner of the screen.

5. An touch screen input apparatus, as in Claim 1, 3 or 4, where the scanner selectively lights the edge points so that the pattern frequency in time is a fraction of the horizontal scanning frequency but much greater than the vertical scanning frequency.

**6.** An apparatus, as in Claim 1, 2, 3, 4 or 5, where the photodetectors are placed on a line colinear with the sides of the screen and further away from the screen surface to increase the size of the accurate center of the screen.

**7.** A touch screen input apparatus, as in Claim 1,2, 3, 4, 5 or 6 where the reflective surface is curved to improve reflected light intensity, and/or where the reflective surfaces are flat, and/or where the reflective surfaces are made from mirrors, and/or where the reflective surfaces are made from a metallized mirror surface, and/or where the reflective surfaces are each attached to one side of a plate (705), the plate being a screen cover.

**8.** A touch screen input apparatus, as in Claim 7, where the plate (705) is made of a transparent plastic.

**9.** A touch screen input apparatus, as in Claim 1 to 8, where each light reflective surface further comprises a bar (701) of transparent plastic, the bar having an inner side (703) and a reflective side (704), the inner side being opposite the reflective side, the inner side having the shape of the screen and being in proximity with the screen surface over the light pattern, and the reflective side being disposed at an angle to light from the light pattern passing through the bar, so that the light is reflected across the screen surface.

**10.** A touch screen input apparatus, as in Claim 9, where each light reflective surface bar is connected together by a transparent plate (705), a first edge of the plate connected to the first reflective surface and a second edge of the plate connected to the second reflective surface.

**11.** A touch screen input apparatus, as in Claim 10, where the plate (705) acts as a mirrored surface to increase the intensity of the reflected light patterns.

**12.** A touch screen input apparatus, as in Claim 1 to 11, where the lighted edge points are grouped together in groups of two or more lighted edge points.

**Patentansprüche**

**1.** Eine Berührungsbildschirm-Eingabevorrichtung zur Bestimmung der Position eines Zeigers (110) auf einem Rechner-Schnittstellenbildschirm (202), enthaltend:

einen Rechner-Schnittstellenbildschirm (202, 203) mit einer Bildschirmoberfläche (203) und einem Paar Ränder (217, 219), wobei ein erster Rand (217) entlang einer ersten Bildschirmseite, und ein gegenüberliegender zweiter Rand (219) auf der anderen Seite des Bildschirms entlang einer zweiten Bildschirmseite verläuft;

einen Raster-Abtaster, der die Bildschirmoberfläche (203) sowie den ersten Rand und den zweiten Rand (217, 219) mit einer horizontalen Abtastfrequenz abtastet, wobei der Abtaster in jedem horizontalen Abtastfrequenzzyklus den Bildschirm in einer ersten Richtung in einer Vielzahl von Zeilen, die den ersten und den zweiten Rand schneiden, überquert, und der Abtaster den Bildschirm in einer zweiten Richtung, die in etwa senkrecht auf der ersten Richtung steht, in einer vertikalen Abtastfrequenz rastert, so daß in jedem vertikalen Abtastfrequenzzyklus alle Zeilen der Bildschirmoberfläche abgetastet werden;

Mittel zum Erzeugen eines Musters (204), gebildet aus einer Vielzahl von erhellten Randpunkten (210), wobei die Randpunkte an den Schnittpunkten der Reihen und der ersten und zweiten Bildschirmränder (217, 219) stehen;

eine erste und eine zweite lichtreflektierende Fläche (205), anliegend an die erste bzw. zweite Seite, wobei die erste reflektierende Fläche (205) das Muster der erhellten Randpunkte von einem ersten Rand (217) über den Bildschirm zur zweiten Seite, und die reflektierende Fläche (205) der zweiten Seite das Muster der erhellten Randpunkte vom zweiten Rand (219) über den Bildschirm zur ersten Seite reflektiert;

vier oder mehr Lichtdetektoren (206), wobei die Lichtdetektoren an den Rändern des Bildschirms montiert sind, um die erleuchteten Randpunkte des von den lichtreflektierenden Flächen (205) reflektierten Musters zu erfassen;

ein Schaltungsmittel zum Bestimmen der Positionen der erleuchteten Randpunkte, deren Licht durch den Zeiger (110) blockiert ist, so daß es keinen der Lichtdetektoren (206) erreichen kann; und

ein Mittel zum Bestimmen der Position des Zeigers (110) auf dem Bildschirm durch Verwenden der Positionen der erleuchteten Randpunkte, deren Licht durch den Zeiger (110) blockiert wird;

dadurch gekennzeichnet, daß

das Muster dadurch erzeugt wird, daß der Abtaster selektiv einen ersten Satz Randpunkte beleuchtet und selektiv eine zweiten Satz Randpunkte nicht beleuchtet, wenn der Abtaster über die Randpunkte läuft, das Muster mit einer Musterfrequenz blinkt, die sich sowohl von der horizontalen als auch von der vertikalen Abtastfrequenz unterscheidet, bestimmt durch das selektive Beleuchten der Randpunkte.

2. Eine Berührungsbildschirm-Eingabevorrichtung gemäß Anspruch 1, in der anstatt des Erzeugens des Musters und der Muster frequenz durch selektives Beleuchten der Randpunkte das Muster durch Beleuchten der Randpunkte beim Überstreichen der Randpunkte durch das Abtasten erzeugt wird, um einen kontinuierlichen Lichtstrich auf beiden Rändern zu erzeugen, und die Musterfrequenz durch nichtreflektierende Rillen in der reflektierenden Oberfläche erzeugt wird.

3. Eine Berührungsbildschirm-Eingabevorrichtung gemäß Anspruch 1 oder 2, in der die erleuchteten Randpunkte Lichtstriche sind.

4. Eine Berührungsbildschirm-Eingabevorrichtung gemäß Anspruch 1, 2 oder 3, in der vier Detektoren angeordnet sind, wobei jeweils einer in einer Ecke des Bildschirms angebracht ist.

5. Eine Berührungsbildschirm-Eingabevorrichtung gemäß Anspruch 1, 3 oder 4, in der der Abtaster selektiv die Randpunkte beleuchtet, so daß die Musterfrequenz in der Zeit ein Bruchteil der horizontalen Abtastfrequenz, jedoch viel größer als die vertikale Abtastfrequenz ist.

6. Eine Berührungsbildschirm-Eingabevorrichtung gemäß Anspruch 1, 2, 3, 4 oder 5, in der die Photodetektoren in einer Linie angeordnet sind, die gleichlinig mit den Seiten des Bildschirms und weiter entfernt von der Bildschirmfläche verläuft, um die Größe des genauen Bildschirmmittelpunkts zu erhöhen.

7. Eine Berührungsbildschirm-Eingabevorrichtung gemäß Anspruch 1, 2, 3, 4, 5 oder 6, in der die reflektierende Oberfläche gekrümmt ist, um die Intensität des reflektierten Lichts zu verstärken, und/oder die reflektierenden Oberflächen eben sind und/oder die reflektierenden Oberflächen aus Spiegeln bestehen, und/oder die reflektierenden Oberflächen aus einer metallisierten Spiegelfläche bestehen, und/oder die reflektierenden Oberflächen jeweils an einer Seite einer Platte (705) befestigt sind, wobei die Platte eine Bildschirmabdeckung ist.

8. Eine Berührungsbildschirm-Eingabevorrichtung gemäß Anspruch 7, in der die Platte (705) aus durchsichtigem Kunststoff besteht.

9. Eine Berührungsbildschirm-Eingabevorrichtung gemäß den Ansprüchen 1 bis 8, in der jede lichtreflektierende Oberfläche ferner einen Balken (701) aus durchsichtigem Kunststoff beinhaltet, wobei der Balken eine Innenseite (703) und eine reflektierende Seite (704) aufweist, die Innenseite der reflektierenden Seite gegenüberliegt, die Innenseite die Form des Bildschirms hat und an die Oberfläche des Bildschirms über dem Lichtmuster anliegt, und die reflektierende Seite in einem Winkel angeordnet ist, um von dem durch den Balken laufenden Lichtmuster beleuchtet zu werden, so daß das Licht quer über die Oberfläche des Bildschirms reflektiert wird.

10. Eine Berührungsbildschirm-Eingabevorrichtung gemäß Anspruch 9, in der die lichtreflektierenden Oberflächenbalken durch eine durchsichtigen Platte (705) miteinander verbunden sind, wobei ein erster Rand der Platte mit der ersten reflektierenden Oberfläche, und ein zweiter Rand der Platte mit der zweiten reflektierenden Oberfläche verbunden ist.

11. Eine Berührungsbildschirm-Eingabevorrichtung gemäß Anspruch 10, in der die Platte (705) als verspiegelte Oberfläche wirkt, um die Intensität des reflektierten Lichtmusters zu verstärken.

12. Eine Berührungsbildschirm-Eingabevorrichtung gemäß den Ansprüchen 1 bis 11, in der die erleuchteten Randpunkte in Gruppen von zwei oder mehr erleuchteten Randpunkten gruppiert sind.

**Revendications**

1. Un dispositif d'entrée par écran tactile, destiné à déterminer la position d'un pointeur (110) sur un écran d'interface d'ordinateur (202) comprenant :

un écran d'interface d'ordinateur (202, 203) ayant une surface d'écran (203) et une paire de bordures (217, 219), une première bordure (217) s'étendant selon un premier côté de l'écran et une deuxième bordure (219) opposée s'étendant sur la surface d'écran, sur un deuxième côté d'écran par rapport à la première bordure;

un scanneur trameur, balayant la surface d'écran (203) et les premières et deuxièmes bordures (217, 219) a une fréquence de balayage horizontale, le scanneur, dans chaque cycle de fréquence de balayage horizontal, traversant l'écran dans une première direction, dans l'une d'une pluralité de lignes coupant les première et deuxième bordures, et le scanneur s'indexant sur l'écran dans une deuxième direction, approximativement perpendiculaire à la première direction, à une fréquence de balayage verticale, de manière à balayer la totalité des lignes de la surface de l'écran dans chaque cycle de fréquence de balayage;

des moyens pour produire un motif (204) constitué d'une pluralité de points de bordure lumineux (210), les points de bordure étant situés aux intersections entre les lignes et lesdites première et deuxième bordures d'écran (217, 219);

une première et une deuxième surface reflétant la lumière (205) adjacente aux premier et deuxième côtés, respectivement, la première surface réfléchissante (205) reflétant le motif des points de bordure éclairés depuis une première bordure (217) sur l'écran vers le deuxième côté et la deuxième surface réfléchissante latérale (205) reflétant le motif des points de bordure éclairés depuis la deuxième bordure (219) sur l'écran vers le premier côté; quatre détecteurs lumineux (206) ou plus, les détecteurs lumineux étant placés de façon adjacente aux bordures de l'écran, afin de détecter les points de bordure éclairés du motif reflété par les surfaces réfléchissantes de la lumière (205);

des moyens de circuit destinés à déterminer les positions des points de bordure éclairés dont la lumière est bloquée par le pointeur (110) et est empêché d'atteindre l'un quelconque desdits détecteurs de lumière (206); et

des moyens pour déterminer la position (P) du pointeur (110) sur l'écran par utilisation desdites positions desdits points de bordure éclairés dont la lumière est bloquée par le pointeur (110);

caractérisé en ce que le motif est produit par l'éclairement sélectif par le scanneur d'un premier jeu de points de bordure et le non-éclairement sélectif d'un deuxième jeu de points de bordure, lorsque le scanneur passe sur les points de bordure, le motif scintillant a une fréquence de motif, différente à la fois des fréquences de balayage horizontal et vertical, déterminée par l'éclairement sélectif des points de bordure.

2. Un dispositif d'entrée à écran tactile selon la revendication 1, dans lequel, au lieu de produire ledit motif et ladite fréquence de motif par un éclairement sélectif des points de bordure, ledit motif est produit par éclairement de points de bordure lors du passage du scanneur sur les points de bordure, de manière à constituer une barre continue de lumière dans les deux bordures et ladite fréquence de motif est crée par des rainures non-réfléchissantes ménagées dans la surface réfléchissante.

3. Un dispositif d'entrée à écran tactile selon la revendication 1 ou 2, dans lequel les points de bordure éclairés sont des lignes interrompues de lumière.

4. Un dispositif d'entrée à écran tactile selon la revendication 1, 2 ou 3, dans lequel sont prévus quatre détecteurs dont chacun est placé à un angle de l'écran.

5. Un dispositif d'entrée à écran tactile selon la revendication 1, 3 ou 4, dans lequel le scanneur éclaire sélectivement les points de bordure, de manière que la fréquence de motif soit temporellement une fraction de la fréquence de balayage horizontale, mais beaucoup plus grande que la fréquence de balayage verticale.

6. Un dispositif selon la revendication 1, 2, 3, 4 ou 5, dans lequel les photodétecteurs sont placés sur une ligne colinéaire vis-à-vis des côtés de l'écran et en outre espacés de la surface de d'écran en vue d'augmenter la taille du centre précis de l'écran.

7. Un dispositif d'entrée à écran tactile selon la revendication 1, 2, 3, 4, 5, ou 6, dans lequel la surface réfléchissante est incurvée pour améliorer l'intensité de la lumière réfléchie, et/ou dans lequel les surfaces réfléchissantes sont plates, et/ou dans lequel les surfaces réfléchissantes sont constituées de miroirs, et/ou dans lequel les surfaces réfléchissantes sont constituées d'une surface en miroir métallisée, et/ou dans lequel les surfaces réfléchissantes sont chacune attachées à un côté d'une plaque (705), la plaque étant un couvercle d'écran.

8. Un dispositif d'entrée à écran tactile selon la revendication 7, dans lequel la plaque (705) est constituée d'une matière plastique transparente.

9. Un dispositif d'entrée à écran tactile selon les revendications 1 à 8, dans lequel chaque surface réfléchissante de la lumière comprend en outre une barre (701) constituée d'une matière plastique transparente, la barre ayant une face intérieure (703) et un côté réfléchissant (704), la face intérieure étant opposée au côté réfléchissant, la face intérieure ayant la forme de l'écran et étant placée à proximité de la surface de l'écran sur le motif lumineux et le côté réfléchissant étant disposé sous un angle vis-à-vis de la lumière issu du motif lumineux passant par la barre, de manière que la lumière soit réfléchie dans la surface d'écran.

10. Un dispositif d'entrée à écran tactile selon la revendication 9, dans lequel chaque berre de surface réfléchissante de la lumière est connectée conjointement à une plaque transparente (705), un premier bord de la plaque étant connectée à la première surface réfléchissante et un deuxième bord de la plaque étant connecté à la deuxième surface réfléchissante.

11. Un dispositif d'entrée à écran tactile selon la revendication 10, dans lequel la plaque (705) agit comme surface rendue réfléchissante, en vue d'augmenter l'intensité des motifs lumineux réfléchis.

12. Un dispositif d'entrée à écran tactile selon les revendications 1 à 11, dans lequel les points de bordure éclairés sont groupés ensemble en formant des groupes de deux points de bordure éclairés ou plus.

FIG. 1
(PRIOR ART)

## FIG. 2A

## FIG. 2B

# FIG. 3

# FIG. 4

NONSTABILITY CIRCUITS

OUTPUT WAVEFORM

OUTPUT WAVEFORM

COMBINED WAVEFORM

# FIG. 5

*FIG. 6*

# FIG. 7

705 PLANAR SHEET
AS A LIGHT GUIDE

701

703

704

704

706

706

702 CRT SURFACE

703

701

704

45°

705

715

703

701

704

# FIG. 8

## FIG. 9

# FIG. 10

WAVEFORMS

1001

1002
1003

1004

1005

1006

1007 TO
COUNTER 1 (905)

1008 TO
COUNTER 2 (906)

# FIG. 11

REGION AB

REGION BD

REGION CD

REGION AC

FIG. 12